# EUROPEAN PATENT APPLICATION

(11) **EP 3 284 860 A1**
(43) Date of publication of application: **21.02.2018**
(21) Application number: 16779643.2
(22) Date of filing: 18.04.2016
(51) Int. Cl.: D06F 58/28

(54) **METHOD AND DEVICE FOR DETERMINING DRYING TIME OF CLOTHES DRYER**

(30) Priority: 17.04.2015 CN 201510183740
(71) Applicant: Qingdao Haier Washing Machine Co., Ltd., Shandong 266101 (CN)
(72) Inventor: YAO, Longping, Qingdao, Shandong 266101 (CN); SHI, Yanqi, Qingdao, Shandong 266101 (CN); ZHU, Dongdong, Qingdao, Shandong 266101 (CN)
(74) Representative: Zacco Sweden AB
(86) International application number: PCT/CN2016/079601
(87) International publication number: WO 2016/165668

(57) **Abstract**

Disclosed is a method for determining drying time of a clothes dryer. The method includes: establishing a database at least including a corresponding relationship between a temperature change rate in a drum and drying time in a controller of the clothes dryer; and inquiring the database according to a change rate of a temperature value in the drum in a drying process to obtain expected drying time, and displaying at least one of the expected drying time and remaining time.

## Description

### TECHNICAL FIELD

The present application relates to the field of clothes dryer devices, for example, relates to a method and device for determining drying time of a clothes dryer.

### BACKGROUND

A clothes dryer is a household appliance for drying washed clothes. A drying process needs to be lasted for some time. A user may leave to do other things in this period of time and come back to take the dried clothes at the end of an expected time.

Generally, time or remaining time for the drying process is mainly determined in the following two modes: firstly, expected drying time is displayed according to weight, material and other standard conditions of clothes to be dried; and secondly, the expected drying time is determined according to a rotating speed of a motor during dewatering in a washing process.

The first method has defects that the number of clothes and water content of the clothes are uncertain in actual use, the actual drying time may be any time in a period of time, but the given expected time is the same value, so the expected drying time (the displayed drying time) is seriously inconsistent with the actual drying time. The second method has defects that the rotating speed of the motor cannot strictly correspond to the number of the clothes, the water content of the clothes and other factors during dewatering, so the expected drying time (the displayed drying time) is also seriously inconsistent with the actual drying time, the user may come back and find that the clothes have not yet been dried or have already been dried, and the user experience is poor.

### SUMMARY

The present invention proposes a method and device for determining drying time of a clothes dryer. The method is more accurate in drying prompting time of the clothes dryer.

The method for determining drying time of a clothes dryer includes:
establishing a database at least including a corresponding relationship between a temperature change rate in a drum and drying time in a controller of the clothes dryer; and
inquiring the database according to a change rate of a temperature value in the drum in a drying process to obtain expected drying time, and displaying at least one of the expected drying time and remaining time.

Optionally, before inquiring the database according to the change rate of the temperature value in the drum in the drying process, the method further includes:
arranging a first temperature detection device at an air outlet of the drum;
obtaining, through measurement by the first temperature detection device, a first temperature value T1 before start of the drying process;
obtaining, through measurement by the first temperature detection device, a second temperature value T2 after lasting the drying process for a duration S;
calculating a difference between the second temperature value T2 and the first temperature value T1 to obtain a temperature value change quantity ΔT, where ΔT = T2-T1; and
calculating the temperature change rate L, where L = ΔT/S.

Optionally, before inquiring the database according to the change rate of the temperature value in the drum in the drying process, the method further includes:
arranging a first temperature detection device outside the drum; and arranging a second temperature detection device at the air outlet of the drum;
obtaining, through measurement by the first temperature detection device, the first temperature value T1 before start of the drying process; and obtaining, through measurement by the second temperature detection device, the second temperature value T2 after lasting the drying process for the duration S;
calculating a difference between the second temperature value T2 and the first temperature value T1 to obtain the temperature value change quantity ΔT, where ΔT = T2-T1; and
calculating the temperature change rate L, where L = ΔT/S.

Optionally, before inquiring the database according to the change rate of the temperature value in the drum in the drying process, the method further includes:
arranging a first temperature detection device outside the drum; and arranging a second temperature detection device at an outlet of a heater;
obtaining, through measurement by the first temperature detection device, the first temperature value T1 before start of the drying process; and obtaining, through measurement by the second temperature detection device, the second temperature value T2 after lasting the drying process for the duration S;
calculating a difference between the second temperature value T2 and the first temperature value T1 to obtain the temperature value change quantity ΔT, where ΔT = T2-T1; and
calculating the temperature change rate L, where L = ΔT/S.

Optionally, after inquiring the database according to the change rate of the temperature value in the drum in the drying process, the method further includes:
calculating and displaying current load weight.

Optionally, the method further includes:
storing a corresponding relationship between the temperature change rate in the drum and water content and/or weight of clothes to be dried into the database; and obtaining the expected drying time according to at least one of the water content and the weight of the clothes to be dried.

Optionally, before inquiring the database according to the change rate of the temperature value in the drum in the drying process, the method further includes:
executing an air cooling process for a set duration T before start of the drying process.

A device for determining drying time of a clothes dryer includes:
a database establishment module configured to establish a database at least including a corresponding relationship between a temperature change rate in a drum and drying time in a controller of the clothes dryer; and
a display module configured to inquire the database according to a change rate of a temperature value in the drum in a drying process to obtain expected drying time, and display at least one of the expected drying time and remaining time.

Optionally, the device further comprises: a first calculation module configured to arrange a first temperature detection device at an air outlet of the drum before inquiring the database according to the change rate of the temperature value in the drum in the drying process, make the first temperature detection device obtain a first temperature value T1 through measurement before start of the drying process, make the first temperature detection device obtain a second temperature value T2 through measurement after lasting the drying process for a duration S, calculate a difference between the second temperature value T2 and the first temperature value T1 to obtain a temperature value change quantity ΔT, where ΔT = T2-T1, and calculate a temperature change rate L, where L = ΔT/S.

Optionally, the device further comprises: a second calculation module configured to arrange the first temperature detection device outside the drum before inquiring the database according to the change rate of the temperature value in the drum in the drying process, arrange a second temperature detection device at the air outlet of the drum, make the first temperature detection device obtain the first temperature value T1 through measurement before start of the drying process, make the second temperature detection device obtain the second temperature value T2 through measurement after lasting the drying process for the duration S, calculate a difference between the second temperature value T2 and the first temperature value T1 to obtain the temperature value change quantity ΔT, where ΔT = T2-T1, and calculate the temperature change rate L, where L = ΔT/S.

Optionally, the device further comprises: a third calculation module configured to arrange the first temperature detection device outside the drum before inquiring the database according to the change rate of the temperature value in the drum in the drying process, arrange the second temperature detection device at an outlet of a heater, make the first temperature detection device obtain the first temperature value T1 through measurement before start of the drying process, make the second temperature detection device obtain the second temperature value T2 through measurement after lasting the drying process for the duration S, calculate a difference between the second temperature value T2 and the first temperature value T1 to obtain the temperature value change quantity ΔT, where ΔT = T2-T1, and calculate the temperature change rate L, where L = ΔT/S.

Optionally, the device further comprises:
a load weight calculation module configured to calculate and display current load weight after inquiring the database according to the change rate of the temperature value in the drum in the drying process.

Optionally, the device further comprises:
a drying time acquisition module configured to store a corresponding relationship between the temperature change rate in the drum and water content and/or weight of clothes to be dried in the database, and obtain the expected drying time according to at least one of the water content and the weight of the clothes to be dried.

Optionally, the device further comprises an air cooling process execution module configured to execute an air cooling process for a set duration T before start of the drying process before inquiring the database according to the change rate of the temperature value in the drum in the drying process.

A computer storage medium stores computer-executable instructions, which are configured to execute the above method.

In the method for determining the drying time of the clothes dryer provided by the present invention, the database is inquired according to the change rate of the temperature value in the drum in the drying process to obtain and display the expected drying time and/or the remaining time, so that the given prompting time is more accurate and has a smaller error compared with the actual time, and the customer experience is good.

### BRIEF DESCRIPTION OF DRAWINGS

Fig. 1 is a flow chart illustrating a method for determining drying time of a clothes dryer provided by embodiment I of the present invention; and
Fig. 2 is a schematic structural diagram illustrating a device for determining drying time of a clothes dryer provided by embodiment V of the present invention.

### DETAILED DESCRIPTION

Technical solutions of the present application are illustrated below in combination with drawings and through embodiments.

### Embodiment I

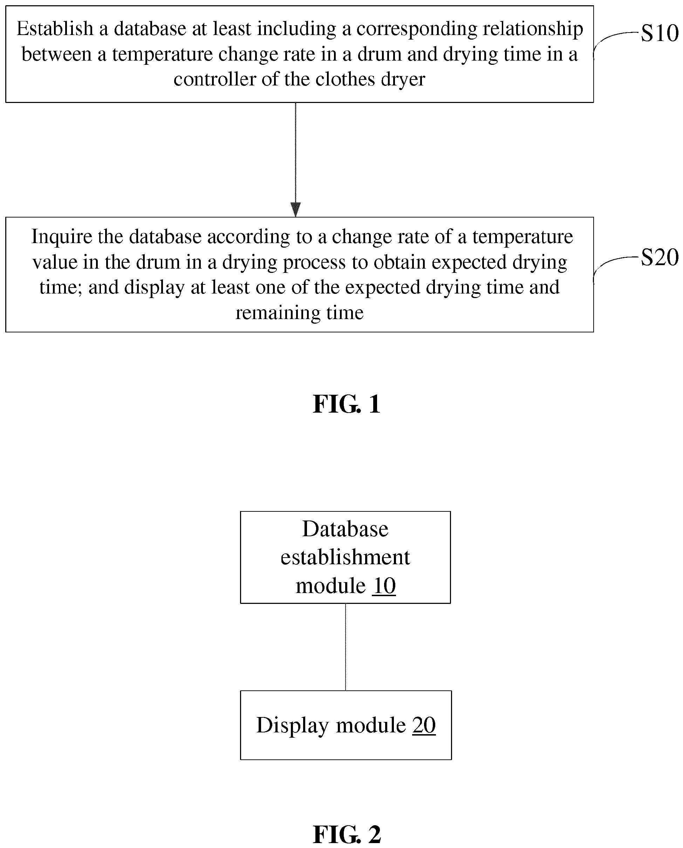

The present embodiment discloses a method for determining drying time of a clothes dryer. As shown in Fig. 1, the method for determining the drying time of the clothes dryer disclosed in the present embodiment includes following steps.

In S10, a database at least including a corresponding relationship between a temperature change rate in a drum and the drying time is established in a controller of the clothes dryer (i.e., the database is established); and

in S20, the database is inquired according to a change rate of a temperature value in the drum in a drying process to obtain expected drying time; and at least one of the expected drying time and remaining time is displayed.

Optionally, the change rate of the temperature value in the drum in the drying process is measured and calculated. The database is inquired according to the change rate to obtain the expected drying time and/or load weight. The expected drying time, the remaining time and/or the load weight are displayed.

The clothes dryer has a constant heating power and a constant air flow in the drying process. Rise in temperature of air in an inner drum in a period of time from start of heating to the balance of the temperature is approximately linear. Slopes of the linear change are different based on the number of clothes. According to such a feature, curves about the rise in the temperature at the time of no load, 1kg, 2kg, 3kg until full load are respectively tested and recorded at a performance debugging and determining stage of the clothes dryer; and actual drying times for different capacities are tested.

The database can be established after the above test is completed. Optionally, different temperature curves are respectively given for different types of clothes. Namely, the obtained data are indexed by the types of the clothes, and different temperature value change rates L correspond to different drying times and load weights. The corresponding relationship between the temperature in the drum and the water content of the clothes to be dried is also stored in the database. The water content of the clothes to be dried can be inquired by measuring the temperature change rate in the drum. The expected drying time can be inquired according to the water content. The remaining time can also be obtained after calculation.

A method for obtaining the temperature value change rate L includes: a first temperature detection device is arranged at an air outlet of the drum; an air cooling process is executed for a set duration T before start of the drying process; a first temperature value T1 is obtained through measurement; a second temperature value T2 is obtained through measurement after lasting the drying process for a duration S; a difference between the second temperature value T2 and the first temperature value T1 is calculated to obtain a temperature value change quantity ΔT, where ΔT = T2-T1; and the temperature change rate L = ΔT/S.

### Embodiment 2:

The present embodiment discloses a method for determining drying time of a clothes dryer, a flow of which is substantially same as a flow of embodiment I. A database at least including a corresponding relationship between a temperature change rate in a drum and the drying time is stored in a controller of the clothes dryer. A change rate of the temperature value in the drum in the drying process is measured and calculated. The database is inquired according to the temperature value change rate to obtain expected drying time and/or load weight. The expected drying time, remaining time and/or the load weight are displayed.

A difference is that the method for obtaining the temperature value change rate L includes: a first temperature detection device is arranged outside the drum; a second temperature detection device is arranged at an air outlet of the drum; a first temperature value T1 is obtained through measurement by the first temperature detection device before start of the drying process; a second temperature value T2 is obtained through measurement by a second temperature detection device after lasting the drying process for a duration S; a difference between the second temperature value T2 and the first temperature value T1 is calculated to obtain a temperature value change quantity ΔT, where ΔT = T2-T1; and the temperature change rate L = ΔT/S.

### Embodiment 3:

The present embodiment discloses a method for determining drying time of a clothes dryer, a flow of which is substantially same as a flow of embodiment I. A database at least including a corresponding relationship between a temperature change rate in a drum and the drying time is stored in a controller of the clothes dryer. A change rate of the temperature value in the drum in the drying process is measured and calculated. The database is inquired according to the temperature value change rate to obtain expected drying time and/or load weight. The expected drying time, remaining time and/or the load weight are displayed.

A difference is that a method for obtaining the temperature value change rate L includes: a first temperature detection device is arranged outside the drum; a second temperature detection device is arranged at an outlet of a heater; a first temperature value T1 is obtained through measurement by the first temperature detection device before start of the drying process; a second temperature value T2 is obtained through measurement by a second temperature detection device after lasting the drying process for a duration S; a difference between the second temperature value T2 and the first temperature value T1 is calculated to obtain a temperature value change quantity ΔT, where ΔT = T2-T1; and the temperature change rate L = ΔT/S.

### Embodiment 4:

The present embodiment discloses a method for determining drying time of a clothes dryer, a flow of which is substantially same as a flow of embodiment I. A database at least including a corresponding relationship between a temperature change rate in a drum and the drying time is stored in a controller of the clothes dryer. The database is inquired according to a change rate of the temperature value in the drum in the drying process to obtain expected drying time. The expected drying time and/or remaining time are displayed.

A difference is that a specific method for obtaining the temperature value change rate L is not limited as long as the temperature value change rate L in an initial period of the drying process can be measured and calculated.

### Embodiment V

The present embodiment further provides a device for determining drying time of a clothes dryer. As shown in Fig. 2, the device for determining the drying time of the clothes dryer in the present embodiment of the present invention includes:
a database establishment module 10, configured to establish a database at least including a corresponding relationship between a temperature change rate in a drum and drying time in a controller of the clothes dryer; and
a display module 20, configured to inquire the database according to a change rate of a temperature value in the drum in a drying process to obtain expected drying time, and display at least one of the expected drying time and remaining time.

Optionally, the device further includes a first calculation module configured to arrange a first temperature detection device at an air outlet of the drum before inquiring the database according to the change rate of the temperature value in the drum in the drying process, make the first temperature detection device obtain a first temperature value T1 through measurement before start of the drying process, make the first temperature detection device obtain a second temperature value T2 through measurement after lasting the drying process for a duration S, calculate a difference between the second temperature value T2 and the first temperature value T1 to obtain a temperature value change quantity ΔT, where ΔT = T2-T1, and calculate a temperature change rate L, where L = ΔT/S.

Optionally, the device further includes a second calculation module configured to arrange the first temperature detection device outside the drum before inquiring the database according to the change rate of the temperature value in the drum in the drying process, arrange a second temperature detection device at the air outlet of the drum, make the first temperature detection device obtain the first temperature value T1 through measurement before start of the drying process, make the second temperature detection device obtain the second temperature value T2 through measurement after lasting the drying process for the duration S, calculate a difference between the second temperature value T2 and the first temperature value T1 to obtain the temperature value change quantity ΔT, where ΔT = T2-T1, and calculate the temperature change rate L, where L = ΔT/S.

Optionally, the device further includes a third calculation module configured to arrange the first temperature detection device outside the drum before inquiring the database according to the change rate of the temperature value in the drum in the drying process, arrange the second temperature detection device at an outlet of a heater, make the first temperature detection device obtain the first temperature value T1 through measurement before start of the drying process, make the second temperature detection device obtain the second temperature value T2 through measurement after lasting the drying process for the duration S, calculate a difference between the second temperature value T2 and the first temperature value T1 to obtain the temperature value change quantity ΔT, where ΔT = T2-T1, and calculate the temperature change rate L, where L = ΔT/S.

Optionally, the device further includes:
a load weight calculation module configured to calculate and display current load weight after inquiring the database according to the change rate of the temperature value in the drum in the drying process.

Optionally, the device further includes:
a drying time acquisition module configured to store a corresponding relationship between the temperature change rate in the drum and water content and/or weight of clothes to be dried in the database, and obtain the expected drying time according to at least one of the water content and the weight of the clothes to be dried.

Optionally, the device further includes an air cooling process execution module configured to execute an air cooling process for a set duration T before start of the drying process before inquiring the database according to the change rate of the temperature value in the drum in the drying process. The present embodiment of the present invention further provides a computer-readable storage medium storing computer-executable instructions, which are configured to execute the method for determining the drying time of the clothes dryer of the above embodiments.

Embodiments of the present invention further provide a user equipment including a memory and at least one processor, wherein the memory stores instructions executable by the processor; and the instructions are configured to execute the method for determining the drying time of the clothes dryer of the above embodiments.

Those skilled in the art should understand that embodiments of the present invention can provide a method, system or computer program product. Therefore, embodiments of the present invention can be realized by hardware, software or a combination of hardware and software. Moreover, embodiments of the present invention can adopt a form of a computer program product capable of being implemented on one or more computer available storage media (including but not limited to a disk memory, an optical memory, etc.) containing computer available program codes.

The present invention is described with reference to flow charts and/or block diagrams according to the method, device (system) and computer program product in embodiments of the present invention. It should be understood that each flow and/or block in the flow charts and/or block diagrams and a combination of flows and/or blocks in the flow charts and/or block diagrams can be realized through computer program instructions. The computer program instructions can be provided for a processor of a general-purpose computer, a special-purpose computer, an embedded processor, or other programmable data processing devices to generate a machine, so that a device for realizing designated functions in one or more flows of the flow diagrams and/or one or more blocks of the block diagrams is generated through the instructions executed by the processor of the computer or other programmable data processing devices.

The computer program instructions can also be stored in a computer readable memory which can guide the computer or other programmable data processing devices to operate in a special mode, so that the instructions stored in the computer readable memory generate a manufactured product including an instruction device, the instruction device realizing designated functions in one or more flows of the flow diagrams and/or one or more blocks of the block diagrams.

The computer program instructions can also be loaded on the computer or other programmable data processing devices, so that a series of operation steps are executed on the computer or other programmable devices to generate processing realized by the computer. Therefore, the instructions executed on the computer or other programmable devices provide steps for realizing designated functions in one or more flows of the flow diagrams and/or one or more blocks of the block diagrams.

### Industrial Applicability

In the method for determining the drying time of the clothes dryer provided by embodiments of the present invention, the database is inquired according to the change rate of the temperature value in the drum in the drying process to obtain and display the expected drying time and/or the remaining time, so that the given prompting time is more accurate and has a smaller error compared with the actual time, and the customer experience is good.

## Claims

1. A method for determining drying time of a clothes dryer, comprising:
establishing a database at least comprising a corresponding relationship between a temperature change rate in a drum and drying time in a controller of the clothes dryer; and
inquiring the database according to a change rate of a temperature value in the drum in a drying process to obtain expected drying time, and displaying at least one of the expected drying time and remaining time.

2. The method for determining the drying time of the clothes dryer according to claim 1, before inquiring the database according to the change rate of the temperature value in the drum in the drying process, further comprising:
arranging a first temperature detection device at an air outlet of the drum;
obtaining, through measurement by the first temperature detection device, a first temperature value T1 before start of the drying process;
obtaining, through measurement by the first temperature detection device, a second temperature value T2 after lasting the drying process for a duration S;
calculating a difference between the second temperature value T2 and the first temperature value T1 to obtain a temperature value change quantity ΔT, wherein AT = T2-T1; and
calculating the temperature change rate L, wherein L = ΔT/S.

3. The method for determining the drying time of the clothes dryer according to claim 1, before inquiring the database according to the change rate of the temperature value in the drum in the drying process, further comprising:
arranging a first temperature detection device outside the drum, and arranging a second temperature detection device at the air outlet of the drum;
obtaining, through measurement by the first temperature detection device, the first temperature value T1 before start of the drying process; and obtaining, through measurement by the second temperature detection device, the second temperature value T2 after lasting the drying process for a duration S;
calculating a difference between the second temperature value T2 and the first temperature value T1 to obtain the temperature value change quantity ΔT, wherein AT = T2-T1; and
calculating the temperature change rate L, wherein L = ΔT/S.

4. The method for determining the drying time of the clothes dryer according to claim 1, before inquiring the database according to the change rate of the temperature value in the drum in the drying process, further comprising:
arranging a first temperature detection device outside the drum; and arranging a second temperature detection device at an outlet of a heater;
obtaining, through measurement by the first temperature detection device, the first temperature value T1 before start of the drying process; and obtaining, through measurement by the second temperature detection device, the second temperature value T2 after lasting the drying process for a duration S;
calculating a difference between the second temperature value T2 and the first temperature value T1 to obtain the temperature value change quantity ΔT, wherein AT = T2-T1; and
calculating the temperature change rate L, wherein L = ΔT/S.

5. The method for determining the drying time of the clothes dryer according to claim 1, after inquiring the database according to the change rate of the temperature value in the drum in the drying process, further comprising:
calculating and displaying current load weight.

6. The method for determining the drying time of the clothes dryer according to claim 1, further comprising:
storing a corresponding relationship between the temperature change rate in the drum and water content and/or weight of clothes to be dried in the database; and obtaining the expected drying time according to at least one of the water content and the weight of the clothes to be dried.

7. The method for determining the drying time of the clothes dryer according to any one of claims 1-6, before inquiring the database according to the change rate of the temperature value in the drum in the drying process, further comprising:
executing an air cooling process for a set duration T before start of the drying process.

8. A device for determining drying time of a clothes dryer, comprising:
a database establishment module, configured to establish a database at least comprising a corresponding relationship between a temperature change rate in a drum and drying time in a controller of the clothes dryer; and
a display module, configured to inquire the database according to a change rate of a temperature value in the drum in a drying process to obtain expected drying time, and display at least one of the expected drying time and remaining time.

9. The device for determining the drying time of the clothes dryer according to claim 1, further comprising: a first calculation module configured to arrange a first temperature detection device at an air outlet of the drum before inquiring the database according to the change rate of the temperature value in the drum in the drying process, make the first temperature detection device obtain a first temperature value T1 through measurement before start of the drying process, make the first temperature detection device obtain a second temperature value T2 through measurement after lasting the drying process for a duration S, calculate a difference between the second temperature value T2 and the first temperature value T1 to obtain a temperature value change quantity ΔT, wherein ΔT = T2-T1, and calculate a temperature change rate L, wherein L = ΔT/S.

10. The device for determining the drying time of the clothes dryer according to claim 1, further comprising: a second calculation module configured to arrange the first temperature detection device outside the drum before inquiring the database according to the change rate of the temperature value in the drum in the drying process, arrange a second temperature detection device at the air outlet of the drum, make the first temperature detection device obtain the first temperature value T1 through measurement before start of the drying process, make the second temperature detection device obtain the second temperature value T2 through measurement after lasting the drying process for the duration S, calculate a difference between the second temperature value T2 and the first temperature value T1 to obtain the temperature value change quantity ΔT, wherein ΔT = T2-T1, and calculate the temperature change rate L, wherein L = ΔT/S.

11. The device for determining the drying time of the clothes dryer according to claim 1, further comprising: a third calculation module configured to arrange the first temperature detection device outside the drum before inquiring the database according to the change rate of the temperature value in the drum in the drying process, arrange the second temperature detection device at an outlet of a heater, make the first temperature detection device obtain the first temperature value T1 through measurement before start of the drying process, make the second temperature detection device obtain the second temperature value T2 through measurement after lasting the drying process for the duration S, calculate a difference between the second temperature value T2 and the first temperature value T1 to obtain the temperature value change quantity ΔT, wherein ΔT = T2-T1, and calculate the temperature change rate L, wherein L = ΔT/S.

12. The device for determining the drying time of the clothes dryer according to claim 1, further comprising:
a load weight calculation module configured to calculate and display current load weight after inquiring the database according to the change rate of the temperature value in the drum in the drying process.

13. The device for determining the drying time of the clothes dryer according to claim 1, further comprising:
a drying time acquisition module configured to store a corresponding relationship between the temperature change rate in the drum and water content and/or weight of clothes to be dried in the database, and obtain the expected drying time according to at least one of the water content and the weight of the clothes to be dried.

14. The device for determining the drying time of the clothes dryer according to any one of claims 1-6, further comprising: an air cooling process execution module configured to execute an air cooling process for a set duration T before start of the drying process before inquiring the database according to the change rate of the temperature value in the drum in the drying process.

15. A computer storage medium storing computer-executable instructions, which are configured to execute the method according to any one of claims 1-7.
